# EUROPÄISCHE PATENTSCHRIFT

(11) **EP 3 208 455 B1**
(45) Veröffentlichungstag und Bekanntmachung des Hinweises auf die Patenterteilung: **04.04.2018**
(21) Anmeldenummer: 16155967.9
(22) Anmeldetag: 16.02.2016
(51) Int. Cl.: F02M 37/00, F02M 37/22, B01D 35/00, B01D 35/18, B01D 36/00

(54) **VORRICHTUNG ZUR REINIGUNG EINES FLÜSSIGEN MEDIUMS**
DEVICE FOR PURIFYING A LIQUID MEDIUM
DISPOSITIF DE NETTOYAGE D'UN MILIEU LIQUIDE

(43) Veröffentlichungstag der Anmeldung: 23.08.2017
(73) Patentinhaber: Willibrord Lösing Filterproduktion GmbH, 45527 Hattingen (DE)
(72) Erfinder: Lösing, Ingeborg, 45529 Hattingen (DE)
(74) Vertreter: Rohmann, Michael

(56) Entgegenhaltungen:
- EP-A1- 0 833 050
- WO-A1-92/01150
- DE-A1- 19 926 172
- DE-T2- 69 716 826
- DE-T2- 69 801 401
- DE-T2- 69 909 693
- US-A1- 2012 204 833

## Beschreibung

Die Erfindung betrifft eine Vorrichtung zur Reinigung eines flüssigen Mediums, insbesondere zur Reinigung von Kraftstoff, wobei Feststoffteilchen und flüssige Komponenten höherer Dichte von flüssigen Komponenten niederer Dichte abtrennbar sind, wobei ein Gehäuse mit zumindest einer Einlassöffnung für das zu reinigende flüssige Medium und mit zumindest einer Auslassöffnung für das gereinigte flüssige Medium vorhanden ist und wobei zumindest ein Rücklaufkanal für das von einem Verbraucher - insbesondere von einem Motor - zurückgeführte flüssige Medium mit Fluideinlass und Fluidauslass das Gehäuse durchsetzt, wobei der Rücklaufkanal zumindest eine Gehäuseunterseite zugewandte Öffnung aufweist, durch welche Öffnung in dem Gehäuse aufsteigendes Gas, insbesondere Luft in den Rücklaufkanal gelangt, so dass das Gas mit dem durch den Rücklaufkanal strömenden flüssigen Medium aus dem Gehäuse austragbar ist. - Die Erfindung bezieht sich vor allem auf eine Vorrichtung zur Reinigung von Kraftstoffen und zwar vorzugsweise in Form von Dieselkraftstoffen. Bei den von dem flüssigen Medium bzw. von dem Kraftstoff/Dieselkraftstoff abzutrennenden flüssigen Komponenten höherer Dichte handelt es sich vor allem um abzutrennendes Wasser. Der in der Vorrichtung gereinigte Kraftstoff, insbesondere Dieselkraftstoff wird anschließend einem Verbraucher, insbesondere einem Motor bzw. Kraftfahrzeugmotor zugeführt.

Vorrichtungen der eingangs genannten Art sind aus der Praxis in unterschiedlichen Ausführungsformen bekannt. Derartige Vorrichtungen sind beispielsweise in EP 0 416 146 A1 und EP 1 637 203 A1 beschrieben. Diese Vorrichtungen haben sich grundsätzlich bewährt. - Viele aus der Praxis bekannten Vorrichtungen der eingangs beschriebenen Art weisen jedoch bestimmte Nachteile auf. In Dieselkraftstoff kann sich bei Raumtemperatur bis zu 12 % Luft lösen. Bei einem Druckabfall gast zumindest ein Teil dieses Gases bzw. der Luft wieder aus. Bei den meisten aus der Praxis bekannten Vorrichtungen kann die Luft eine in der Vorrichtung angeordnete Filtereinrichtung nicht passieren und sammelt sich vor der Filtereinrichtung an. Erst wenn der dadurch resultierende Druck ausreichend hoch ist, können größere Mengen Luft kurzfristig die Filtereinrichtung passieren. Das ist unter anderem im Hinblick auf eine einwandfreie Funktion der Filtereinrichtung nachteilhaft. - Ein weiterer Nachteil der aus der Praxis bekannten Vorrichtungen besteht darin, dass bei Temperaturen unterhalb von -5°C Bestandteile des Dieselkraftstoffes ausflocken und die Filtereinrichtung verstopfen können. Diese ausgeflockten Bestandteile schmelzen in der Regel erst wieder ab einer Temperatur von 20°C. - Im Ergebnis sind die bekannten Vorrichtungen verbesserungsfähig.

Aus WO 92/01150 A1 ist eine Vorrichtung der eingangs beschriebenen Art bekannt. Auch hier wird in dem Gehäuse der Vorrichtung aufsteigendes Gas in einen Rücklaufkanal geführt, so dass es aus dem Gehäuse austragbar ist. Die Effektivität der Entgasung bzw. Entlüftung lässt hier jedoch zu wünschen übrig. Diese Vorrichtung hat sich in der Praxis nicht bewährt. Auch aus DE 697 16 826 T2 ist eine Vorrichtung der vorstehend beschriebenen Art bekannt. Auch diese Vorrichtung lässt im Hinblick auf die Effektivität und Funktionssicherheit der Entgasung bzw. Entlüftung zu wünschen übrig.

Der Erfindung liegt das technische Problem zugrunde, eine Vorrichtung der eingangs genannten Art anzugeben, bei der die vorstehend beschriebenen Nachteile effektiv und einfach vermieden werden können.

Zur Lösung des technischen Problems lehrt die Erfindung eine Vorrichtung der eingangs beschriebenen Art bzw. nach dem Oberbegriff des Patentanspruches 1, welche dadurch gekennzeichnet ist, dass zumindest ein zur Öffnung des Rücklaufkanals geneigter Strömungskanal vorgesehen ist und dass der Strömungskanal als eine zur Gehäuseunterseite hin offene Strömungsnut ausgebildet ist.

Mit der erfindungsgemäßen Vorrichtung wird insbesondere Kraftstoff bzw. Dieselkraftstoff gereinigt, bevor dieser einem Verbraucher, insbesondere einem Motor zugeführt wird. Von dem Verbraucher bzw. Motor nicht verbrauchter Kraftstoff wird zurückgeführt, in der Regel in einen Tank bzw. Kraftstofftank zurückgeführt. Es liegt im Rahmen der Erfindung, dass dieser Kraftstoff vor Rückführung in den Tank/Kraftstofftank durch den Rücklaufkanal der erfindungsgemäßen Vorrichtung geführt wird. Dabei wird der Kraftstoff durch den Fluideinlass des Rücklaufkanals in das Gehäuse eingeführt und durch den Fluidauslass wieder aus dem Gehäuse herausgeführt. Vorzugsweise sind im Betriebszustand der Vorrichtung Fluideinlass und Fluidauslass des Rücklaufkanals auf der gleichen Höhe bzw. im Wesentlichen auf der gleichen Höhe angeordnet. Es empfiehlt sich, dass Fluideinlass und Fluidauslass auf gegenüberliegenden Seiten des Gehäuses angeordnet sind und miteinander fluchten.

Es liegt im Rahmen der Erfindung, dass der Rücklaufkanal innerhalb des Gehäuses zumindest eine der Gehäuseunterseite zugewandte Öffnung aufweist, durch welche Öffnung in dem Gehäuse aufsteigendes Gas - insbesondere aufsteigende Luft - in den Rücklaufkanal gelangt, so dass das Gas bzw. die Luft mit dem durch den Rücklaufkanal strömenden flüssigen Medium aus dem Gehäuse austragbar ist. Die Gehäuseunterseite bezieht sich dabei auf den aufgerichteten vertikalen bzw. im Wesentlichen vertikalen Betriebszustand der Vorrichtung, in dem die Gehäuseunterseite unten und der Rücklaufkanal oben angeordnet ist. Gemäß bevorzugter Ausführungsform der Erfindung ist in diesem Betriebszustand der Vorrichtung der Rücklaufkanal horizontal bzw. im Wesentlichen horizontal angeordnet. Empfohlenermaßen weisen Fluideinlass und Fluidauslass des Rücklaufkanals die gleiche Öffnungsweite bzw. den gleichen Öffnungsdurchmesser auf.

Gemäß einer sehr bevorzugten Ausführungsform der Erfindung ist der Rücklaufkanal über den größten Teil seiner das Gehäuse durchsetzenden Länge zur Gehäuseunterseite hin offen ausgebildet. Dann weist der Rücklaufkanal zweckmäßigerweise eine lange - bevorzugt durchgehende - Öffnung in Richtung zur Gehäuseunterseite hin auf. Es empfiehlt sich, dass der Rücklaufkanal über zumindest 30 %, vorzugsweise über zumindest 40 % und sehr bevorzugt über zumindest 45 % seines Umfanges zur Gehäuseunterseite hin offen ausgebildet ist. Nach einer Ausführungsvariante der Erfindung ist der Rücklaufkanal im Querschnitt rund bzw. kreisförmig ausgebildet und sind insbesondere Fluideinlass und Fluidauslass des Rücklaufkanals im Querschnitt rund bzw. kreisförmig ausgebildet.

Erfindungsgemäß ist zur Förderung der Gasströmung zu dem Rücklaufkanal bzw. zur Förderung der Gassammlung in dem Rücklaufkanal zumindest ein zur Öffnung des Rücklaufkanals hin geneigter Strömungskanal vorgesehen. Vorzugsweise sind zumindest zwei, bevorzugt lediglich zwei zur Öffnung des Rücklaufkanals hin geneigte Strömungskanäle vorgesehen. Dabei hat es sich bewährt, dass ein solcher Strömungskanal als eine zur Gehäuseunterseite hin offene Strömungsnut ausgebildet ist. Zweckmäßigerweise ist ein Strömungskanal bzw. eine Strömungsnut zur Gehäuseoberseite hin geneigt ausgeführt. Empfohlenermaßen ist ein Strömungskanal bzw. eine Strömungsnut in der Unterseite der Gehäusedecke angeordnet bzw. eingebracht.

Es liegt im Rahmen der Erfindung, dass Gas, insbesondere Luft, durch die Strömungskanäle bzw. Strömungsnuten nach oben in den Rücklaufkanal strömt. Der Rücklaufkanal bzw. die obere Wandung des Rücklaufkanals bildet zweckmäßigerweise gegenüber einem Strömungskanal bzw. gegenüber einer Strömungsnut gleichsam den höchsten Punkt bzw. das höchste Niveau, zu dem Gas bzw. Luft durch den Strömungskanal/durch die Strömungsnut strömt. - Zweckmäßigerweise ist ein solcher Strömungskanal bzw. ist eine solche Strömungsnut kontinuierlich zur Öffnung des Rücklaufkanals bzw. zur Gehäuseoberseite hin geneigt ausgebildet. Dabei beträgt der Neigungswinkel vorzugsweise 5° bis 45°, bevorzugt 8° bis 30°. Der Neigungswinkel wird dabei zweckmäßigerweise im Betriebszustand der Vorrichtung zwischen dem Strömungskanal bzw. der Strömungsnut und einer horizontalen Ebene gemessen. Gemäß einer empfohlenen Ausführungsform verlaufen zwei Strömungskanäle bzw. zwei Strömungsnuten spiegelsymmetrisch bezüglich einer senkrecht zur Längsachse des Rücklaufkanals angeordneten Spiegelebene. Es empfiehlt sich, dass die Strömungskanäle bzw. Strömungsnuten und insbesondere die zwei Strömungskanäle bzw. zwei Strömungsnuten in der bezüglich seiner Länge gesehenen Mitte des Rücklaufkanals münden bzw. etwa im Bereich seiner Mitte in den Rücklaufkanal münden.

Eine besonders bevorzugte Ausführungsform der Erfindung ist dadurch gekennzeichnet, dass der Rücklaufkanal mit Fluideinlass und Fluidauslass in strömungstechnischer Hinsicht auf der gleichen Strömungsseite einer von dem flüssigen Medium zu durchströmenden Filtereinrichtung angeordnet ist wie die Einlassöffnung oder die Auslassöffnung für das flüssige Medium. Vorzugsweise ist der Rücklaufkanal mit Fluideinlass und Fluidauslass auf der gleichen Strömungsseite wie die Einlassöffnung angeordnet. Es hat sich bewährt, dass der Rücklaufkanal - bevorzugt sowohl mit Fluideinlass als auch mit Fluidauslass - im Betriebszustand der Vorrichtung oberhalb der Einlassöffnung oder der Auslassöffnung - vorzugsweise oberhalb der Einlassöffnung - angeordnet ist.

Es liegt im Rahmen der Erfindung, dass über den Fluideinlass des Rücklaufkanals erwärmtes flüssiges Medium in den Rücklaufkanal einführbar ist, so dass das Gehäuseinnere bzw. das im Gehäuseinneren vorhandene flüssige Medium erwärmt bzw. beheizt wird. Weiterhin liegt es im Rahmen der Erfindung, dass der von einem Verbraucher - insbesondere von einem Motor - zurückgeführte Kraftstoff bzw. Dieselkraftstoff in die erfindungsgemäße Vorrichtung eingeführt wird, um hier eine Beheizung zu realisieren, bevor der Kraftstoff/Dieselkraftstoff vorzugsweise in einen Tank bzw. Kraftstofftank zurückgeführt wird. In der Regel werden nur etwa 10 % des geförderten gereinigten Kraftstoffs tatsächlich vom Verbraucher bzw. vom Motor verbraucht. Der restliche Kraftstoff wird normalerweise in den Tank/Kraftstofftank zurückgeführt. Erfindungsgemäß wird der unverbrauchte Kraftstoff in die erfindungsgemäße Vorrichtung zwecks Beheizung dieser Vorrichtung eingeführt, bevor er aus dem Fluidauslass des Rücklaufkanals in den Tank/Kraftstofftank zurückgeführt wird. Außerdem liegt es im Rahmen der Erfindung, dass der von einem Verbraucher bzw. von einem Motor zurückgeführte erwärmte Kraftstoff ohne Abkühlung bzw. ohne wesentliche Abkühlung in die Vorrichtung bzw. in den Fluideinlass des Rücklaufkanals eingeführt wird.

Der Erfindung liegt die Erkenntnis zugrunde, dass mit dem vom Verbraucher in den Rücklaufkanal der erfindungsgemäßen Vorrichtung zurückgeführten flüssigen Medium zwei wesentliche Funktionen erfüllt werden können. Zum einen kann mit diesem zurückgeführten Medium in dem Rücklaufkanal angesammeltes Gas bzw. angesammelte Luft aus der Vorrichtung entfernt werden und zum anderen kann mit dem zurückgeführten erwärmten flüssigen Medium auch eine Erwärmung der Vorrichtung bzw. des in der Vorrichtung bereits vorhandenen flüssigen Mediums erfolgen. Dadurch kann verhindert werden, dass bei niedrigen Temperaturen insbesondere Komponenten im Dieselkraftstoff ausflocken und die Filtereinrichtung der erfindungsgemäßen Vorrichtung verstopfen.

Der zu reinigende Kraftstoff wird vor der Zuführung zum Verbraucher bzw. zum Motor in der erfindungsgemäßen Vorrichtung gereinigt. Nach besonders bevorzugter Ausführungsform der Erfindung wird dieser zu reinigende Kraftstoff vor der Einlassöffnung des Gehäuses durch zumindest eine Heizeinrichtung beheizt, so dass erwärmtes, zu reinigendes flüssiges Medium in die Vorrichtung eingeführt wird. Eine solche Beheizung erfolgt vorzugsweise beim Starten des Verbrauchers bzw. beim Anlassen des Motors, damit eine Ausfällung bzw. Ausflockung von Kraftstoffkomponenten vermieden werden kann oder bereits ausgefällte bzw. ausgeflockte Komponenten wieder aufgeschmolzen werden können. Es liegt im Rahmen der Erfindung, dass die genannte Heizeinrichtung nicht kontinuierlich betrieben werden muss. Nach der Startphase des Verbrauchers bzw. der Anlassphase des Motors mit der Beheizung durch die vorgenannte Heizeinrichtung reicht in der Regel ein Erwärmen bzw. Vorwärmen der erfindungsgemäßen Vorrichtung durch den in den Rücklaufkanal zurückgeführten Kraftstoff bzw. Dieselkraftstoff. Somit erfolgt vorzugsweise beim Anlassen des Verbrauchers bzw. Motors eine Erwärmung des zu reinigenden flüssigen Mediums mittels der Heizeinrichtung und nach dem Anlassen des Verbrauchers bzw. Motors eine Erwärmung des in der Vorrichtung vorhandenen flüssigen Mediums mit Hilfe des in den Rücklaufkanal zurückgeführten Kraftstoffes.

Es liegt im Rahmen der Erfindung, dass das Gehäuse der erfindungsgemäßen Vorrichtung eine Gehäusebasis und einen auf der Gehäusebasis fixierten Gehäusedeckel aufweist. Vorzugsweise ist der Gehäusedeckel von der Gehäusebasis lösbar. Gemäß einer Ausführungsvariante der Erfindung ist der Gehäusedeckel mittels einer Schraubverbindung an der Gehäusebasis fixierbar und über diese Schraubverbindung auch wieder lösbar. Nach besonders empfohlener Ausführungsform der Erfindung ist der Rücklaufkanal - bevorzugt mit seinem Fluideinlass und mit seinem Fluidauslass - in dem Gehäusedeckel angeordnet. Zweckmäßigerweise ist die Einlassöffnung für das zu reinigende flüssige Medium und/oder die Auslassöffnung für das gereinigte flüssige Medium in dem Behälterdeckel vorgesehen.

Es liegt im Rahmen der Erfindung, dass in dem Gehäuse der erfindungsgemäßen Vorrichtung eine Filtereinrichtung angeordnet ist, wobei die Filtereinrichtung zumindest ein Filterelement zur Abtrennung von Feststoffteilchen aus dem flüssigen Medium aufweist sowie zumindest ein Abscheidesieb zur Abscheidung bzw. Abtrennung von flüssigen Komponenten höherer Dichte - insbesondere zur Abscheidung von Wasser - aufweist. Eine besonders bevorzugte Ausführungsform der Erfindung ist dadurch gekennzeichnet, dass zumindest ein Sammelbehälter für das Auffangen bzw. Sammeln der flüssigen Komponenten höherer Dichte - insbesondere von Wasser - vorhanden ist. Dabei ist der Sammelbehälter zweckmäßigerweise an der Gehäuseunterseite angeordnet. Es liegt im Rahmen der Erfindung, dass flüssige Komponenten höherer Dichte - insbesondere Wasser - an dem Abscheidesieb unter Einwirkung der Schwerkraft zur Gehäuseunterseite hin und insbesondere in den Sammelbehälter laufen bzw. strömen.

Eine empfohlene Ausführungsform der Erfindung ist dadurch gekennzeichnet, dass das Filterelement hohlzylinderförmig um einen Zentralkanal des Gehäuses - insbesondere um einen im Betriebszustand der Vorrichtung vertikal bzw. im Wesentlichen vertikal orientierten Zentralkanal des Gehäuses - angeordnet ist. Der Zentralkanal ist zweckmäßigerweise zentralmittig in dem Gehäuse der erfindungsgemäßen Vorrichtung angeordnet. Es hat sich bewährt, dass das Filtermaterial des Filterelementes faltenförmig ausgebildet ist und dass sich vorzugsweise die Falten des Filtermaterials in Längsrichtung bzw. parallel zur Längsachse des Gehäuses erstrecken. Es liegt somit im Rahmen der Erfindung, dass die Faltenspitzen des faltenförmigen Filtermaterials sich in Längsrichtung des Gehäuses erstrecken. Diese faltenartige Anordnung des Filtermaterials ermöglicht es, dass Gas bzw. Luft besser nach oben in Richtung des Rücklaufkanals strömen kann. Es hat sich bewährt, dass das Filtermaterial des Filterelementes Koaleszenzeigenschaften aufweist, so dass flüssige Komponenten höherer Dichte koaleszieren können bzw. Tröpfchen bilden können, die mittels des Abscheidesiebes auf einfache Weise abgeführt werden können bzw. im Sammelbehälter gesammelt werden können. Eine sehr empfohlene Ausführungsform der Erfindung ist dadurch gekennzeichnet, dass das Abscheidesieb für die flüssigen Komponenten höherer Dichte den Zentralkanal des Gehäuses umgibt und dass das Abscheidesieb seinerseits von dem Filterelement bzw. von dem Filtermaterial des Filterelementes umgeben wird.

Eine sehr bewährte Ausführungsform der Erfindung zeichnet sich dadurch aus, dass die Filtereinrichtung radial von dem zu reinigenden flüssigen Medium durchströmt wird und zwar vorzugsweise radial von außen nach innen durchströmt wird, so dass das gereinigte flüssige Medium durch den Zentralkanal über die Auslassöffnung aus dem Gehäuse strömt bzw. geführt wird. Es liegt im Rahmen der Erfindung, dass flüssige Komponenten höherer Dichte dabei nach unten zur Gehäuseunterseite hin bzw. in den Sammelbehälter strömen. - Eine sehr bevorzugte Ausführungsform der Erfindung ist dadurch gekennzeichnet, dass der Rücklaufkanal mit seinem Fluideinlass und seinem Fluidauslass sowie die Einlassöffnung für das zu reinigende flüssige Medium auf der Zuströmseite bzw. Einströmseite der Filtereinrichtung angeordnet sind und dass vorzugsweise der Zentralkanal auf der Ausströmseite der Filtereinrichtung vorgesehen ist, so dass über den Zentralkanal das gereinigte flüssige Medium zur Auslassöffnung hin strömt.

Es empfiehlt sich, dass der Rücklaufkanal im Randbereich des Gehäuses bzw. im Randbereich des Gehäusedeckels angeordnet ist. Vorzugsweise wird der Rücklaufkanal an einer Seite von der Seitenwand des Gehäuses bzw. von der Seitenwand des Gehäusedeckels begrenzt. Insoweit liegt es im Rahmen der Erfindung, dass der Rücklaufkanal gleichsam tangential zum Querschnitt - vorzugsweise zum runden Querschnitt - des Gehäuses bzw. des Gehäusedeckels verläuft. Zweckmäßigerweise und bevorzugt bei der vorstehend erläuterten Ausführungsform ist die Einlassöffnung und/oder die Auslassöffnung an der gleichen Seite des Gehäuses bzw. des Gehäusedeckels angeordnet wie der Rücklaufkanal.

Der Erfindung liegt die Erkenntnis zugrunde, dass mit einer erfindungsgemäßen Vorrichtung die eingangs aus der Praxis bzw. aus dem Stand der Technik bekannten Nachteile auf einfache und funktionssichere Weise vermieden bzw. erheblich reduziert werden können. Weiterhin liegt der Erfindung die Erkenntnis zugrunde, dass das von einem Verbraucher bzw. von einem Motor zurückgeführte flüssige Medium vor seiner Rückführung in einen Tank problemlos zwecks Vermeidung dieser Nachteile eingesetzt werden kann. Zu betonen ist dabei, dass ohnehin zurückgeführtes flüssiges Medium bzw. zurückgeführter Kraftstoff verwendet wird und in dieser Hinsicht keine weiteren aufwendigen Maßnahmen erforderlich sind. Indem das zurückgeführte flüssige Medium durch den erfindungsgemäßen Rücklaufkanal geführt wird, kann zum einen die Ansammlung von Gas bzw. von Luft in dem Gehäuse der erfindungsgemäßen Vorrichtung effektiv vermieden werden. Weiterhin kann der in den Rücklaufkanal zurückgeführte Kraftstoff zur Erwärmung des Gehäuses bzw. des im Gehäuse vorhandenen flüssigen Mediums eingesetzt werden, so dass in dem Medium störende Ausfällungen oder Ausflockungen bei niedrigen Temperaturen vermieden werden können. Diese beachtlichen Vorteile werden auf einfache Weise und mit geringem Aufwand erzielt. Grundsätzlich ist lediglich das Vorsehen des erfindungsgemäßen Rücklaufkanals erforderlich und ansonsten wird das ohnehin vorhandene zurückgeführte flüssige Medium zur Realisierung der vorstehend erläuterten Vorteile genutzt. Insoweit zeichnet sich die erfindungsgemäße Vorrichtung auch durch einen geringen Kostenaufwand aus.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Darstellung einer erfindungsgemäßen Vorrichtung,

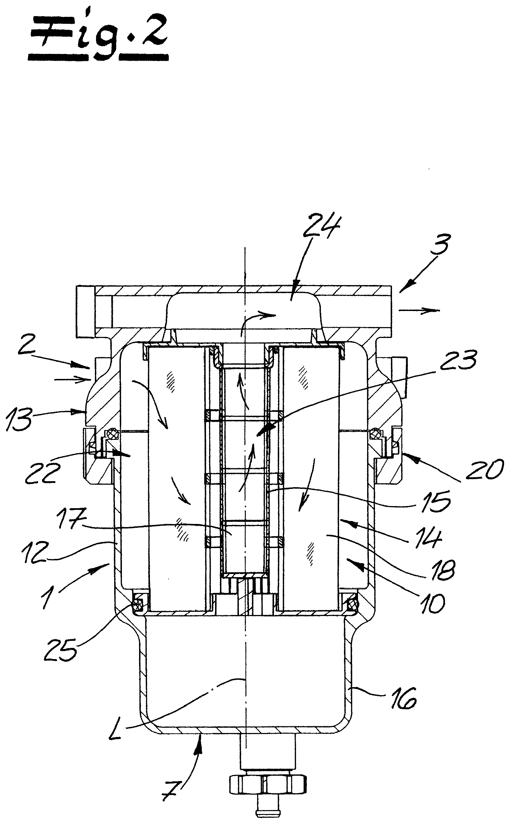

- Fig. 2: den Gegenstand gemäß Fig. 1 im Schnitt,
- Fig. 3: einen Gehäusedeckel der erfindungsgemäßen Vorrichtung im Schnitt und
- Fig. 4: eine Unteransicht auf den Gehäusedeckel der erfindungsgemäßen Vorrichtung.

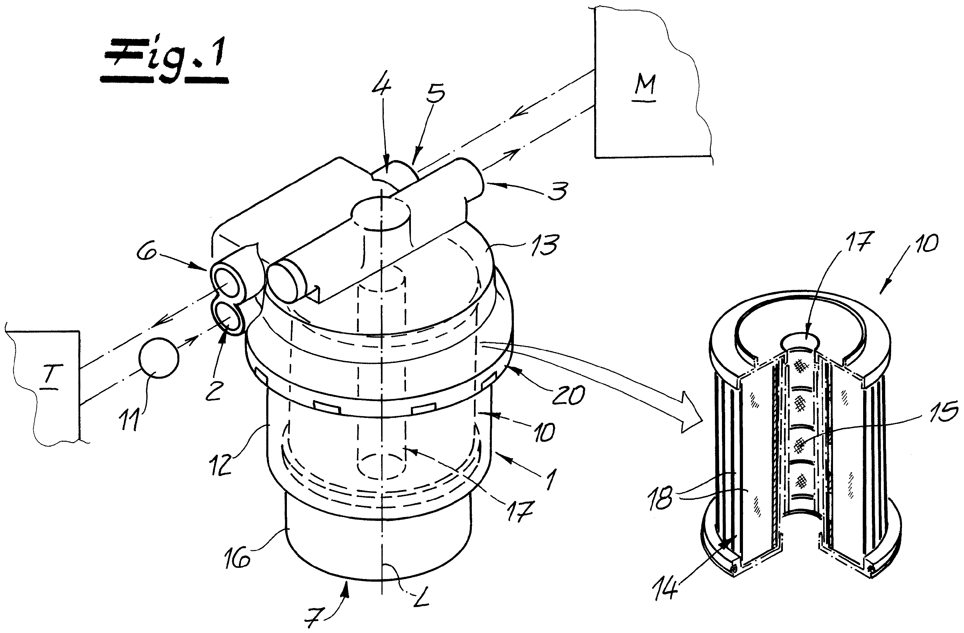

Die Figuren zeigen eine erfindungsgemäße Vorrichtung zur Reinigung eines flüssigen Mediums und zwar im Ausführungsbeispiel eine Vorrichtung zur Reinigung von Dieselkraftstoff. Mit dieser Vorrichtung sind Feststoffteilchen und flüssige Komponenten höherer Dichte von flüssigen Komponenten niederer Dichte abtrennbar. Die Vorrichtung weist ein Gehäuse 1 mit einer Einlassöffnung 2 für das zu reinigende flüssige Medium (Dieselkraftstoff) und mit einer Auslassöffnung 3 für das gereinigte flüssige Medium (gereinigter Dieselkraftstoff) auf. Erfindungsgemäß ist ein Rücklaufkanal 4 für das von einem Verbraucher zurückgeführte flüssige Medium mit Fluideinlass 5 und Fluidauslass 6 vorgesehen, wobei der Rücklaufkanal 4 das Gehäuse 1 durchsetzt. In der Figur 1 ist ein sehr vereinfachtes Schema für die bevorzugte Funktionsweise einer erfindungsgemäßen Vorrichtung dargestellt. Dieselkraftstoff wird von einem Tank T zwecks Reinigung der erfindungsgemäßen Vorrichtung zugeführt und durch die Einlassöffnung 2 in das Gehäuse 1 eingeführt. Nach der Reinigung des Dieselkraftstoffes in der Vorrichtung wird der gereinigte Dieselkraftstoff aus der Auslassöffnung 3 wieder aus dem Gehäuse herausgeführt und einem Verbraucher in Form eines Motors M zugeführt. Von dem Motor nicht verbrauchter Dieselkraftstoff wird dann zum Tank zurückgeführt und zwar erfindungsgemäß durch den Rücklaufkanal 4 der erfindungsgemäßen Vorrichtung zum Tank zurückgeführt. Der vom Motor kommende zurückgeführte Dieselkraftstoff wird durch den Fluideinlass 5 in das Gehäuse 1 eingeführt und nach Durchströmen des Rücklaufkanals 4 durch den Fluidauslass 6 wieder aus dem Gehäuse 1 herausgeführt und dem Tank T zugeführt.

Das Gehäuse 1 weist bevorzugt und im Ausführungsbeispiel eine untere Gehäusebasis 12 mit einer Gehäuseunterseite 7 auf sowie einen auf der Gehäusebasis 12 fixierten Gehäusedeckel 13. Bevorzugt und im Ausführungsbeispiel sind Gehäusebasis 12 und Gehäusedeckel 13 lösbar miteinander verbunden und zwar empfohlenermaßen und im Ausführungsbeispiel über eine Schraubverbindung 20.

Es liegt im Rahmen der Erfindung, dass der Rücklaufkanal 4 eine der Gehäuseunterseite 7 des Gehäuses 1 zugewandte Öffnung 8 aufweist. Vorzugsweise und im Ausführungsbeispiel ist der Rücklaufkanal 4 über den größten Teil seiner den Deckel 13 des Gehäuses 1 durchsetzenden Länge I zur Gehäuseunterseite 7 hin offen ausgebildet. Insoweit resultiert eine lange durchgehende Öffnung 8. Dabei ist die Öffnung 8 zweckmäßigerweise und im Ausführungsbeispiel über mehr als 40 % des Umfanges des Rücklaufkanals 4 zur Gehäuseunterseite 7 hin offen ausgebildet. Zweckmäßigerweise und im Ausführungsbeispiel weist der Rücklaufkanal 4 einen runden bzw. kreisförmigen Querschnitt auf. Die nach unten hin offene Öffnung 8 des Rücklaufkanals 4 gewährleistet, dass aus dem flüssigen Medium bzw. aus dem Dieselkraftstoff austretendes Gas, insbesondere Luft in dem Gehäuse 1 aufsteigt und sich in der Öffnung 8 bzw. in dem Rücklaufkanal 4 sammelt. Durch das über den Rücklaufkanal 4 zurückgeführte flüssige Median (Dieselkraftstoff) kann dieses Gas bzw. diese Luft gleichsam mitgerissen werden und über den Fluidauslass 6 aus dem Gehäuse 1 ausgetragen werden. Insoweit lassen sich in vorteilhafter Weise störende Gasansammlungen bzw. Luftansammlungen in dem Gehäuse 1 vermeiden.

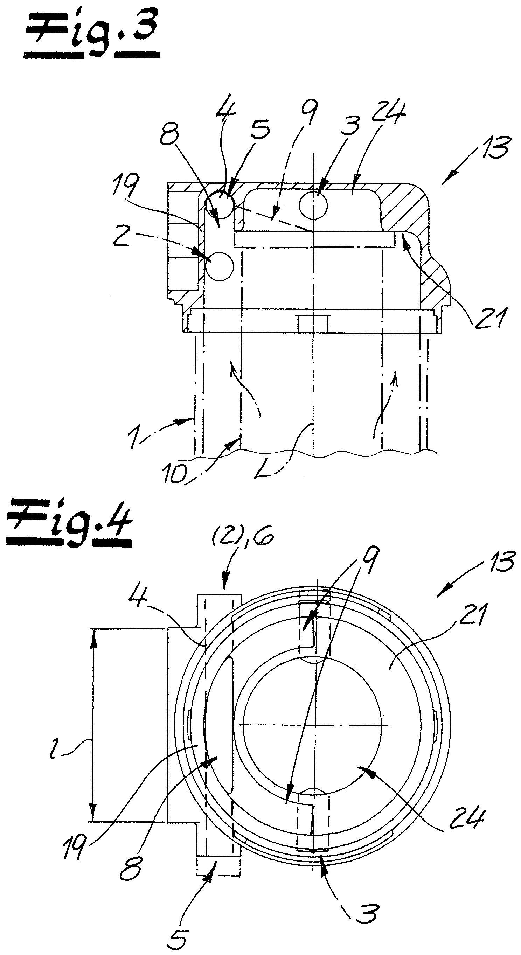

Nach bevorzugter Ausführungsform und im Ausführungsbeispiel sind zur Förderung der Gasströmung zu dem Rücklaufkanal 4 hin bzw. zur Förderung der Gassammlung in dem Rücklaufkanal 4 zwei zur Öffnung 8 des Rücklaufkanals 4 hin geneigte Strömungsnuten 9 vorgesehen (Figur 4). Diese Strömungsnuten 9 sind bevorzugt und im Ausführungsbeispiel an bzw. in der Unterseite der Decke 21 des Behälterdeckels 13 vorgesehen. Diese Strömungsnuten 9 sind empfohlenermaßen und im Ausführungsbeispiel kontinuierlich zum Rücklaufkanal 4 bzw. vorzugsweise und im Ausführungsbeispiel zur Mitte des Rücklaufkanals 4 hin geneigt ausgebildet. Die bevorzugte und im Ausführungsbeispiel an der Unterseite der Decke 21 des Behälterdeckels 13 angeordnete obere Wandung des Rücklaufkanals 4 bildet gegenüber den Strömungsnuten 9 gleichsam den höchsten Punkt bzw. das höchste Niveau, zu dem das Gas bzw. die Luft durch die Strömungsnuten 9 nach oben strömt.

Es liegt im Rahmen der Erfindung, dass in dem Gehäuse 1 der erfindungsgemäßen Vorrichtung eine Filtereinrichtung 10 angeordnet ist. Diese Filtereinrichtung 10 weist empfohlenermaßen und im Ausführungsbeispiel ein insgesamt hohlzylindrisch ausgebildetes Filterelement 14 und ein darin angeordnetes ebenfalls hohlzylindrisch ausgebildetes Abscheidesieb 15 auf. Das Filterelement 14 und das Abscheidesieb 15 umgeben bevorzugt und im Ausführungsbeispiel einen Zentralkanal 17 des Gehäuses 1 und zweckmäßigerweise und im Ausführungsbeispiel sind Filterelement 14 und Abscheidesieb 15 koaxial zu dem Zentralkanal 17 orientiert. Der Zentralkanal 17 verläuft vorzugsweise und im Ausführungsbeispiel parallel und koaxial zur Längsmittelachse L des Gehäuses 1.

Die in dem Gehäuse 1 angeordnete Filtereinrichtung 10 teilt den Gehäuseinnenraum in eine Einströmseite 22 für das zu reinigende flüssige Medium (Dieselkraftstoff) und eine Ausströmseite 23 für das gereinigte flüssige Medium (Dieselkraftstoff) auf. Über die bevorzugte und im Ausführungsbeispiel im Gehäusedeckel 13 angeordnete Einlassöffnung 2 strömt das zu reinigende flüssige Medium (Dieselkraftstoff) in die Einströmseite 22, wobei dieser Einströmbereich sich ringförmig um die Filtereinrichtung 10 erstreckt. Das zu reinigende flüssige Medium durchströmt dann das Filterelement 14, wobei Feststoffteilchen aus dem flüssigen Medium abgeschieden werden und durchströmt anschließend das Abscheidesieb 15, wobei flüssige Komponenten höherer Dichte von flüssigen Komponenten niederer Dichte getrennt werden. Bei den Komponenten höherer Dichte handelt es sich insbesondere um Wasser. Die Komponenten höherer Dichte bzw. das Wasser fließt unter Einwirkung der Schwerkraft zur Gehäuseunterseite 7 hin und sammelt sich in dem unten am Gehäuse angeordneten Sammelbehälter 16. Der koaxial zur Mittellängsachse L des Gehäuses 1 orientierte Zentralkanal 17 bildet gleichsam die Ausströmseite 23 für das in der Filtereinrichtung 10 gereinigte flüssige Medium. Dieses gereinigte flüssige Medium (Dieselkraftstoff) strömt über den Zentralkanal 17 nach oben in einen zylinderförmigen Auslassbereich 24 und verlässt diesen über die Auslassöffnung 3 des Gehäuses.

In den Figuren ist erkennbar, dass der erfindungsgemäße Rücklaufkanal 4 mit seinem Fluideinlass 5 und mit seinem Fluidauslass 6 bevorzugt und im Ausführungsbeispiel auf der gleichen Strömungsseite, nämlich auf der Einströmseite 22 angeordnet ist wie die Einlassöffnung 2 des Gehäuses. Dabei ist vorzugsweise und im Ausführungsbeispiel der Rücklaufkanal 4 mit seinem Fluideinlass 5 und seinem Fluidauslass 6 oberhalb der Einlassöffnung 2 angeordnet. Die Auslassöffnung 3 ist im Ausführungsbeispiel auf der gleichen Höhe vorgesehen wie der Rücklaufkanal 4 bzw. sein Fluideinlass 5 und sein Fluidauslass 6.

Es wurde bereits oben dargelegt, dass nach bevorzugter Ausführungsform der Erfindung vom Motor nicht verbrauchter Dieselkraftstoff in die erfindungsgemäße Vorrichtung über den Fluideinlass 5 des Rücklaufkanals 4 eingeführt wird. Es handelt sich dabei um erwärmtes flüssiges Medium bzw. um erwärmten Dieselkraftstoff, so dass damit das Gehäuseinnere bzw. das im Gehäuseinneren vorhandene flüssige Medium (Dieselkraftstoff) erwärmt bzw. beheizt wird. Dadurch können auf einfache und effektive Weise insbesondere bei tieferen Temperaturen auftretende unerwünschte Ausfällungen bzw. Ausflockungen in dem Gehäuse 1 vermieden werden. Insoweit erfüllt der erfindungsgemäße Rücklaufkanal 4 zwei wesentliche Funktionen. Zum einen kann durch das in den Rücklaufkanal 4 zurückgeführte flüssige Medium in dem Gehäuse entstehendes bzw. angesammeltes Gas, insbesondere Luft funktionssicher aus dem Gehäuse 1 herausgeführt werden und zum anderen kann durch das in den Rücklaufkanal 4 zurückgeführte flüssige Medium eine Beheizung des Gehäuses 1 zur Vermeidung von unerwünschten Ausflockungen stattfinden.

Eine bevorzugte Ausführungsform der Erfindung zeichnet sich im Übrigen dadurch aus, dass wie im Ausführungsbeispiel vor der Einlassöffnung 2 eine Heizeinrichtung 11 zum Erwärmen des in das Gehäuse 1 eingeführte zu reinigende flüssige Medium erfolgt. Vorzugsweise wird diese Heizeinrichtung 11 vor allem oder ausschließlich beim Anlassen des Motors M in Betrieb genommen. Im weiteren laufenden Betrieb kann dann die weitere Aufheizung des flüssigen Mediums durch das in den Rücklaufkanal 4 zurückgeführte flüssige Medium erfolgen.

Empfohlenermaßen und im Ausführungsbeispiel weist die Filtereinrichtung 10 ein Filterelement 14 zur Abtrennung der Feststoffteilchen aus dem flüssigen Medium auf. Dabei ist das Filtermaterial des Filterelementes 14 zweckmäßigerweise und im Ausführungsbeispiel faltenförmig ausgebildet und die Falten 18 des Filtermaterials erstrecken sich bevorzugt und im Ausführungsbeispiel parallel zur Längsmittelachse L des Gehäuses 1. Durch diese Orientierung des Filtermaterials kann in dem Gehäuse 1 vorhandenes Gas - insbesondere Luft - durch die Zwischenräume zwischen den Falten 18 des Filtermaterials auf einfache Weise nach oben zum Rücklaufkanal 4 hinströmen. - Das Filtermaterial des Filterelementes 14 weist im Übrigen bevorzugt und im Ausführungsbeispiel Koaleszenzeigenschaften auf, so dass eine Tröpfchenbildung der flüssigen Komponenten höherer Dichte, insbesondere von Wasser gefördert wird, wodurch ein Abscheiden dieser flüssigen Komponenten am Abscheidesieb 15 und somit das Sammeln dieser Komponenten im Sammelbehälter 16 erleichtert wird.

Zweckmäßigerweise und im Ausführungsbeispiel ist im Übrigen die Filtereinrichtung 10 mittels eines vorzugsweise als O-Ring ausgebildeten Dichtelementes 25 gegenüber dem unteren Bereich des Gehäuses 1 bzw. gegenüber dem Sammelbehälter 16 abgedichtet. - In den Figuren ist erkennbar, dass bevorzugt und im Ausführungsbeispiel der erfindungsgemäße Rücklaufkanal 4 im Randbereich des Gehäuses 1 bzw. des Gehäusedeckels 13 angeordnet ist und vorzugsweise und im Ausführungsbeispiel an einer Seite von der Seitenwand 19 des Gehäuses 1 bzw. des Gehäusedeckels 13 begrenzt wird. Zweckmäßigerweise und im Ausführungsbeispiel ist auch die Einlassöffnung 2 in diesem Randbereich des Gehäuses 1 vorgesehen, wobei - wie oben bereits angemerkt - die Einlassöffnung 2 bevorzugt und im Ausführungsbeispiel unterhalb des Rücklaufkanals 4 angeordnet ist.

## Patentansprüche

1. Vorrichtung zur Reinigung eines flüssigen Mediums, insbesondere zur Reinigung von Kraftstoff, vorzugsweise von Dieselkraftstoff, wobei Feststoffteilchen und flüssige Komponenten höherer Dichte von flüssigen Komponenten niederer Dichte abtrennbar sind, wobei ein Gehäuse (1) mit zumindest einer Einlassöffnung (2) für das zu reinigende flüssige Medium und mit zumindest einer Auslassöffnung (3) für das gereinigte flüssige Medium vorhanden ist und wobei zumindest ein Rücklaufkanal (4) für das von einem Verbraucher - insbesondere von einem Motor - zurückgeführte flüssige Medium mit Fluideinlass (5) und Fluidauslass (6) das Gehäuse (1) durchsetzt, wobei der Rücklaufkanal (4) zumindest eine der Gehäuseunterseite (7) zugewandte Öffnung (8) aufweist, durch welche Öffnung (8) in dem Gehäuse (1) aufsteigendes Gas, insbesondere Luft in den Rücklaufkanal (4) gelangt, so dass das Gas mit dem durch den Rücklaufkanal (4) strömenden flüssigen Medium aus dem Gehäuse (1) austragbar ist, **dadurch gekennzeichnet, dass** zumindest ein zur Öffnung (8) des Rücklaufkanals (4) geneigter Strömungskanal vorgesehen ist und dass der Strömungskanal als eine zur Gehäuseunterseite (7) hin offene Strömungsnut (9) ausgebildet ist.

2. Vorrichtung nach Anspruch 1, **dadurch gekennzeichnet, dass** der Rücklaufkanal (4) über den größten Teil seiner das Gehäuse (1) durchsetzenden Länge (I) zur Gehäuseunterseite (7) hin offen ausgebildet ist.

3. Vorrichtung nach einem der Ansprüche 1 oder 2, **dadurch gekennzeichnet, dass** zumindest zwei, bevorzugt zwei zur Öffnung (8) des Rücklaufkanals (4) geneigte Strömungskanäle vorgesehen sind.

4. Vorrichtung nach einem der Ansprüche 1 bis 3, **dadurch gekennzeichnet, dass** der Rücklaufkanal (4) mit Fluideinlass (5) und Fluidauslass (6) in strömungstechnischer Hinsicht auf der gleichen Strömungsseite - insbesondere auf der gleichen Strömungsseite einer von dem flüssigen Medium zu durchströmenden Filtereinrichtung (10) - angeordnet ist wie die Einlassöffnung (2) oder die Auslassöffnung (3) für das flüssige Medium - vorzugsweise wie die Einlassöffnung (2) für das flüssige Medium - und wobei der Rücklaufkanal (4), bevorzugt sowohl mit Fluideinlass (5) als auch mit Fluidauslass (6) im Betriebszustand der Vorrichtung oberhalb der Einlassöffnung (2) oder oberhalb der Auslassöffnung (3) - vorzugsweise oberhalb der Einlassöffnung (2) - angeordnet ist.

5. Vorrichtung nach einem der Ansprüche 1 bis 4, **dadurch gekennzeichnet, dass** über den Fluideinlass (5) des Rücklaufkanals (4) erwärmtes flüssiges Medium in den Rücklaufkanal (4) einführbar ist, so dass das Gehäuseinnere bzw. das im Gehäuseinneren vorhandene flüssige Medium beheizt wird.

6. Vorrichtung nach einem der Ansprüche 1 bis 5, **dadurch gekennzeichnet, dass** vor der Einlassöffnung (2) des Gehäuses (1) zumindest eine Heizeinrichtung (11) zum Erwärmen des in das Gehäuse (1) eingeführten flüssigen Mediums vorgesehen ist.

7. Vorrichtung nach einem der Ansprüche 1 bis 6, **dadurch gekennzeichnet, dass** das Gehäuse (1) eine Gehäusebasis (12) und einen auf der Gehäusebasis (12) fixierten Gehäusedeckel (13) aufweist - wobei vorzugsweise der Gehäusedeckel (13) von der Gehäusebasis (12) lösbar ist - und wobei empfohlenermaßen der Rücklaufkanal (4) - bevorzugt mit Fluideinlass (5) und Fluidauslass (6) - in dem Gehäusedeckel (13) angeordnet ist.

8. Vorrichtung nach einem der Ansprüche 1 bis 7, **dadurch gekennzeichnet, dass** in dem Gehäuse (1) eine Filtereinrichtung (10) angeordnet ist, wobei die Filtereinrichtung (10) zumindest ein Filterelement (14) zur Abtrennung von Feststoffteilchen aus dem flüssigen Medium aufweist sowie zumindest ein Abscheidesieb (15) zur Abscheidung bzw. Abtrennung von flüssigen Komponenten höherer Dichte, insbesondere zur Abscheidung von Wasser aufweist und wobei zumindest ein Sammelbehälter (16) für das Auffangen bzw. Sammeln der flüssigen Komponenten höherer Dichte - insbesondere von Wasser - vorhanden ist, wobei der Sammelbehälter (16) insbesondere an der Gehäuseunterseite (7) angeordnet ist.

9. Vorrichtung nach Anspruch 8, **dadurch gekennzeichnet, dass** das Filterelement (14) hohlzylinderförmig um einen Zentralkanal (17) des Gehäuses (1) - insbesondere um einen in Betriebszustand der Vorrichtung vertikal bzw. im Wesentlichen vertikal orientierten Zentralkanal (17) des Gehäuses (1) - angeordnet ist, wobei das Filtermaterial des Filterelementes (14) vorzugsweise faltenförmig ausgebildet ist und wobei sich die Falten (18) des Filtermaterials in Längsrichtung bzw. parallel zur Längsmittelachse (L) des Gehäuses (1) erstrecken.

10. Vorrichtung nach einem der Ansprüche 8 oder 9, **dadurch gekennzeichnet, dass** das Abscheidesieb (15) den Zentralkanal (17) des Gehäuses (1) umgibt und wobei das Abscheidesieb (15) von dem Filterelement (14) umgeben wird, vorzugsweise hohlzylindrisch umgeben wird.

11. Vorrichtung nach einem der Ansprüche 8 bis 10, **dadurch gekennzeichnet, dass** die Filtereinrichtung (10) radial von dem zu reinigenden flüssigen Medium durchströmt wird und zwar vorzugsweise radial von außen nach innen durchströmt wird, so dass das gereinigte flüssige Medium durch den Zentralkanal (17) über die Auslassöffnung (3) aus dem Gehäuse (1) strömt.

12. Vorrichtung nach einem der Ansprüche 8 bis 11, **dadurch gekennzeichnet, dass** der Rücklaufkanal (4) mit Fluideinlass (5) und Fluidauslass (6) sowie die Einlassöffnung (2) auf der Zuströmseite bzw. Einströmseite der Filtereinrichtung (10) angeordnet sind, und wobei vorzugsweise der Zentralkanal (17) auf der Ausströmseite der Filtereinrichtung (10) angeordnet ist, über welchen Zentralkanal (17) das gereinigte flüssige Medium zur Auslassöffnung (3) strömt.

13. Vorrichtung nach einem der Ansprüche 1 bis 12, **dadurch gekennzeichnet, dass** der Rücklaufkanal (4) im Randbereich des Gehäuses (1) bzw. des Gehäusedeckels (13) angeordnet ist und vorzugsweise an einer Seite von der Seitenwand (19) des Gehäuses (1) bzw. des Gehäusedeckels (13) begrenzt wird.

14. Vorrichtung nach einem der Ansprüche 1 bis 13, **dadurch gekennzeichnet, dass** die Einlassöffnung (2) und/oder die Auslassöffnung (3) an der gleichen Seite des Gehäuses (1) bzw. des Gehäusedeckels (13) angeordnet ist/sind wie der Rücklaufkanal (4).

## Claims

1. A device for purifying a liquid medium, in particular for purifying fuel, preferably diesel fuel, wherein solid particles and liquid components of higher density can be separated from liquid components of lower density, wherein a housing (1) with at least one inlet opening (2) for the liquid medium to be purified and with at least one outlet opening (3) for the purified liquid medium is provided and wherein at least one return channel (4) for the liquid medium fed back by a consumer - in particular an engine - with a fluid inlet (5) and a fluid outlet (6) passes through the housing (1), wherein the return channel (4) comprises at least one opening (8) facing the housing underside (7), through which opening (8) gas, in particular air, rising in the housing (1) passes into the return channel (4), so that the gas can be carried out of the housing (1) with the liquid medium flowing through the return channel (4), **characterised in that** at least one flow channel inclined towards the opening (8) of the return channel (4) is provided and that the flow channel is constituted as a flow groove (9) open towards the housing underside (7).

2. The device according to claim 1, **characterised in that** the return channel (4) is constituted open towards the housing underside (7) over the major part of its length (l) passing through the housing (1).

3. The device according to any one of claims 1 or 2, **characterised in that** at least two, preferably two, flow channels inclined towards the opening (8) of the return channel (4) are provided.

4. The device according to any one of claims 1 to 3, **characterised in that** the return channel (4) with a fluid inlet (5) and a fluid outlet (6) is arranged, from the flow-related standpoint, on the same flow side - in particular on the same flow side of a filtering device (10) through which the liquid medium is to flow - as the inlet opening (2) or the outlet opening (3) for the liquid medium - preferably as the inlet opening (2) for the liquid medium - and wherein the return channel (4), preferably both with fluid inlet (5) and also with fluid outlet (6), is arranged in the operating state of the device above the inlet opening (2) or above the outlet opening (3) - preferably above the inlet opening (2).

5. The device according to any one of claims 1 to 4, **characterised in that** heated liquid medium can be introduced into the return channel (4) via the fluid inlet (5) of the return channel (4), so that the housing interior or the liquid medium present in the housing interior is heated.

6. The device according to any one of claims 1 to 5, **characterised in that** at least one heating device (11) is provided before the inlet opening (2) of the housing (1) for heating the liquid medium introduced into the housing (1).

7. The device according to any one of claims 1 to 6, **characterised in that** the housing (1) comprises a housing base (12) and a housing cover (13) fixed on the housing base (12) - wherein the housing cover (13) is preferably detachable from the housing base (12) - and wherein it is recommended that the return channel (4) - preferably with fluid inlet (5) and fluid outlet (6) - is arranged in the housing cover (13).

8. The device according to any one of claims 1 to 7, **characterised in that** a filtering device (10) is arranged in the housing (1), wherein the filtering device (10) comprises at least one filtering element (14) for separating solid particles from the liquid medium and at least one separating sieve (15) for the separation or segregation of liquid components of higher density, in particular for the separation of water, and wherein at least one collecting container (16) is provided for catching or collecting the liquid components of higher density - in particular water, wherein the collecting container (16) is arranged in particular at the housing underside (7).

9. The device according to claim 8, **characterised in that** the filtering element (14) is arranged in the form of a hollow cylinder around a central channel (17) of the housing (1) - in particular around a central channel (17) of the housing (1) orientated vertically or essentially vertically in the operating state of the device, wherein the filter material of the filtering element (14) is preferably constituted pleated and wherein the pleats (18) of the filter material extend in the longitudinal direction or parallel to the longitudinal central axis (L) of the housing (1).

10. The device according to any one of claims 8 or 9, **characterised in that** the separating sieve (15) surrounds the central channel (17) of the housing (1) and wherein the separating sieve (15) is surrounded by the filtering element (14), is preferably surrounded by a hollow cylinder.

11. The device according to any one of claims 8 to 10, **characterised in that** the liquid medium to be purified flows radially through the filtering device (10) and indeed preferably flows through radially from the outside inwards, so that the purified liquid medium flows out of the housing (1) through the central channel (17) via the outlet opening (3).

12. The device according to any one of claims 8 to 11, **characterised in that** the return channel (4) with fluid inlet (5) and fluid outlet (6) as well as the inlet opening (2) are arranged on the incoming side or inflow side of the filtering device (10), and wherein the central channel (17) is preferably arranged on the outflow side of the filtering device (10), via which central channel (17) the purified liquid medium flows to the outlet opening (3).

13. The device according to any one of claims 1 to 12, **characterised in that** the return channel (4) is arranged in the edge region of the housing (1) or of the housing cover (13) and is preferably bordered on one side by the side wall (19) of the housing (1) or of the housing cover (13).

14. The device according to any one of claims 1 to 13, **characterised in that** the inlet opening (2) and/or the outlet opening (3) is/are arranged on the same side of the housing (1) or the housing cover (13) as the return channel (4).

## Revendications

1. Dispositif pour le nettoyage d'un milieu liquide, en particulier pour le nettoyage de carburant, de préférence de carburant Diesel, des particules solides et des composants liquides de densité plus élevée pouvant être séparés des composants liquides de plus faible densité, un boîtier (1) avec au moins une ouverture d'entrée (2) pour le milieu liquide à nettoyer et avec au moins une ouverture de sortie (3) pour le milieu liquide nettoyé étant présentes et au moins un conduit de retour (4) pour le milieu liquide renvoyé par un consommateur, notamment par un moteur, avec entrée de fluide (5) et sortie de fluide (6) traversant le boîtier (1), le conduit de retour (4) comportant au moins une ouverture (8) tournée vers la face inférieure de boîtier (7), ouverture (8) à travers laquelle le gaz montant dans le boîtier (1), notamment l'air, parvient dans le conduit de retour (4), de telle sorte que le gaz peut être extrait du boîtier (1) avec le milieu liquide s'écoulant à travers le conduit de retour (4), **caractérisé en ce qu'**au moins un conduit d'écoulement incliné vers l'ouverture (8) du conduit de retour (4) est prévu et **en ce que** le conduit d'écoulement est constitué comme une rainure d'écoulement (9) ouverte vers la face inférieure de boîtier (7).

2. Dispositif selon la revendication 1, **caractérisé en ce que** le conduit de retour (4) est constitué ouvert vers la face inférieure de boîtier (7) sur la majeure partie de sa longueur (1) traversant le boîtier (1).

3. Dispositif selon l'une quelconque des revendications 1 ou 2, **caractérisé en ce qu'**au moins deux, de préférence deux conduits d'écoulement inclinés vers l'ouverture (8) du conduit de retour (4) sont prévus.

4. Dispositif selon l'une quelconque des revendications 1 à 3, **caractérisé en ce que** le conduit de retour (4) avec entrée de fluide (5) et sortie de fluide (6) est disposé du point de vue technique des fluides sur le même côté d'écoulement, notamment sur le même côté d'écoulement d'un dispositif de filtrage (10) à traverser par le milieu liquide que l'ouverture d'entrée (2) ou l'ouverture de sortie (3) pour le milieu liquide, de préférence que l'ouverture d'entrée (2) pour le milieu liquide et le conduit de retour (4) de préférence tant avec l'entrée de fluide (5) qu'avec également la sortie de fluide (6) étant situé à l'état de fonctionnement du dispositif, au-dessus de l'ouverture d'entrée (2) ou au-dessus de l'ouverture de sortie (3), de préférence au-dessus de l'ouverture d'entrée (2).

5. Dispositif selon l'une quelconque des revendications 1 à 4, **caractérisé en ce que** le milieu liquide réchauffé par l'entrée de fluide (5) du conduit de retour (4) peut être introduit dans le conduit de retour (4) de telle sorte que l'intérieur du boîtier ou le milieu liquide présent à l'intérieur du boîter est chauffé.

6. Dispositif selon l'une quelconque des revendications 1 à 5, **caractérisé en ce qu'**au moins un dispositif de chauffage (11) est prévu avant l'ouverture d'entrée (2) du boîtier (1) pour réchauffer le milieu liquide introduit dans le boîtier (1).

7. Dispositif selon l'une quelconque des revendications 1 à 6, **caractérisé en ce que** le boîtier (1) comporte une base de boîtier (12) et un couvercle de boîtier (13) fixé à la base du boîtier (12), le couvercle de boîtier (13) pouvant être de préférence détaché de la base de boîtier (12) et le conduit de retour (4), de préférence avec entrée de (5) et sortie de fluide (6), est disposé de façon recommandée dans le couvercle de boîtier (13).

8. Dispositif selon l'une quelconque des revendications 1 à 7, **caractérisé en ce qu'**un dispositif de filtrage (10) est disposé dans le boîtier (1), le dispositif de filtrage (10) comportant au moins un élément de filtre (14) pour la séparation des particules solides du milieu liquide ainsi qu'au moins un tamis de déposition (15) pour déposer ou séparer des composants liquides de densité plus élevée, notamment pour déposer de l'eau et au moins un réservoir collecteur (16) étant présent pour recueillir ou collecter des composants liquides de densité plus élevée, notamment de l'eau, le réservoir collecteur (16) étant disposé en particulier sur la face inférieure du boîtier (7).

9. Dispositif selon la revendication 8, **caractérisé en ce que** l'élément de filtre (14) est disposé en forme de cylindre creux autour d'un conduit central (17) du boîtier (1), notamment autour d'un conduit central (17) du boîtier (1) orienté à l'état de fonctionnement du dispositif verticalement ou pour l'essentiel à la verticale, le matériau du filtre de l'élément de filtre (14) étant de préférence constitué en forme plissée et les plis (18) du matériau de filtre s'étendant dans le sens longitudinal ou parallèlement à l'axe médian longitudinal (L) du boîtier (1).

10. Dispositif selon l'une quelconque des revendications 8 ou 9, **caractérisé en ce que** le tamis de déposition (15) entoure le conduit central (17) du boîtier (1) et le tamis de déposition (15) étant entouré par l'élément de filtre (14), étant de préférence entouré en cylindre creux.

11. Dispositif selon l'une quelconque des revendications 8 à 10, **caractérisé en ce que** le dispositif de filtrage (10) est traversé radialement par le milieu liquide à nettoyer et est à savoir traversé de préférence radialement de l'extérieur vers l'intérieur de telle sorte que le milieu liquide nettoyé s'écoule du boîtier (1) à travers le conduit central (17) par l'ouverture de sortie (3).

12. Dispositif selon l'une quelconque des revendications 8 à 11, **caractérisé en ce que** le conduit de retour (4) avec entrée de fluide (5) et sortie de fluide (6) ainsi que l'ouverture d'entrée (2) sont disposés sur le côté d'arrivée ou le côté d'introduction du dispositif de filtrage (10) et le conduit central (17) étant de préférence disposé sur le côté de sortie du dispositif de filtrage (10), conduit central (17) par lequel s'écoule le milieu liquide nettoyé vers l'ouverture de sortie (3).

13. Dispositif selon l'une quelconque des revendications 1 à 12, **caractérisé en ce que** le conduit de retour (4) est disposé dans le secteur de bordure du boîtier (1) ou du couvercle de boîtier (13) et est limité de préférence sur un côté de la paroi latérale (19) du boîtier (1) ou du couvercle de boîtier (13).

14. Dispositif selon l'une quelconque des revendications 1 à 13, **caractérisé en ce que** l'ouverture d'entrée (2) et/ou l'ouverture de sortie (3) sont disposées sur le même côté du boîtier (1) ou du couvercle de boîtier (13) que le conduit de retour (4).
